(19) Europäisches Patentamt
European Patent Office
Office européen des brevets

(11) **EP 2 150 325 B1**

(12) **EUROPEAN PATENT SPECIFICATION**

(45) Date of publication and mention
of the grant of the patent:
**28.11.2012 Bulletin 2012/48**

(51) Int Cl.:
***B01D 33/01*** *(2006.01)*

(21) Application number: **08753977.1**

(22) Date of filing: **29.05.2008**

(86) International application number:
**PCT/SE2008/000363**

(87) International publication number:
**WO 2008/147288 (04.12.2008 Gazette 2008/49)**

(54) **SEAL ARRANGEMENT FOR A WATER FILTRATION DEVICE**

DICHTUNGSANORDNUNG FÜR EIN WASSERFILTRIERGERÄT

SYSTÈME D'ÉTANCHÉITÉ POUR DISPOSITIF DE FILTRATION D'EAU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.05.2007 SE 0701306**

(43) Date of publication of application:
**10.02.2010 Bulletin 2010/06**

(73) Proprietor: **Blue Air AB**
**114 26 Stockholm (SE)**

(72) Inventors:
• **PIHLTRÄD, Herman**
**S-112 39 Stockholm (SE)**
• **WENNERSTRÖM, Johan**
**S-192 69 Sollentuna (SE)**

(74) Representative: **Eriksson, Kjell**
**Norrtelje Patentbyra AB**
**P.O.B. 38**
**761 21 Norrtälje (SE)**

(56) References cited:
**WO-A1-00/57985           WO-A1-2005/002706**
**US-A- 3 970 565          US-A- 4 643 981**
**US-A- 5 567 309          US-A1- 2005 019 091**
**US-A1- 2005 109 689**

## Description

### Technical field of the invention

The present invention relates to a seal arrangement of a device for filtration of water, which device comprises a container which has an aperture for replenishment with water, and a filtration unit which is movable relative to the container, which filtration unit comprises a filtration element, a control stem connected to the filtration element, and seal means along the periphery of the filtration element.

### State of the art

A water cleaner known from WO 0057985 comprises a container and a filtration element which is provided with a seal which extends round the periphery of the filtration element. The seal may for example take the form of an O-ring and abuts against the inside of the container.

A device for filtration of water which is known from WO 2005/002706 comprises a container and a filtration unit provided with a seal arrangement in the form of a tongue which runs round the filtration unit and has an extent in both the radial and tangential directions of the filtration unit. The tongue abuts against the inside of the container.

### Objects and features of the invention

A primary object of the present invention is to disclose a seal arrangement which provides assurance that water cannot pass between the inside of the container and the filtration element.

Another object of the present invention is to provide a number of cooperating sealing tongues on the filtration element.

A further object of the present invention is to configure the container in such a way as to achieve optimum sealing.

At least the primary object of the present invention is achieved by a seal arrangement provided with the features indicated in the independent claim 1 set out below. Preferred embodiments of the invention are defined in the dependent claims.

### Brief description of the drawings

A preferred embodiment of the invention is described below with reference to the attached drawings, in which:

Fig. 1    depicts a device for cleaning of water, which device is provided with a seal arrangement according to the present invention;

Fig. 2    depicts a perspective view of a filtration element and of seal means attached to the filtration element; and

Fig. 3    depicts a side view of the filtration element according to Fig. 2.

### Detailed description of a preferred embodiment of the invention

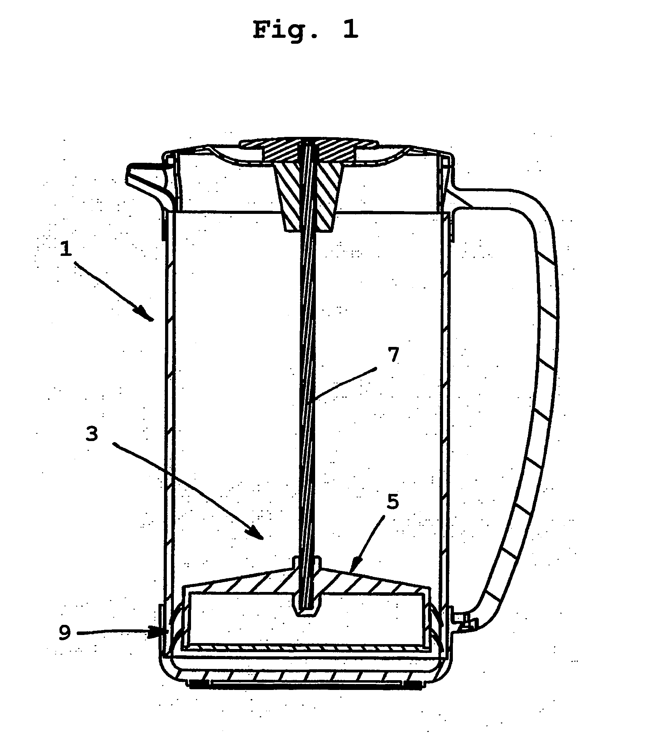

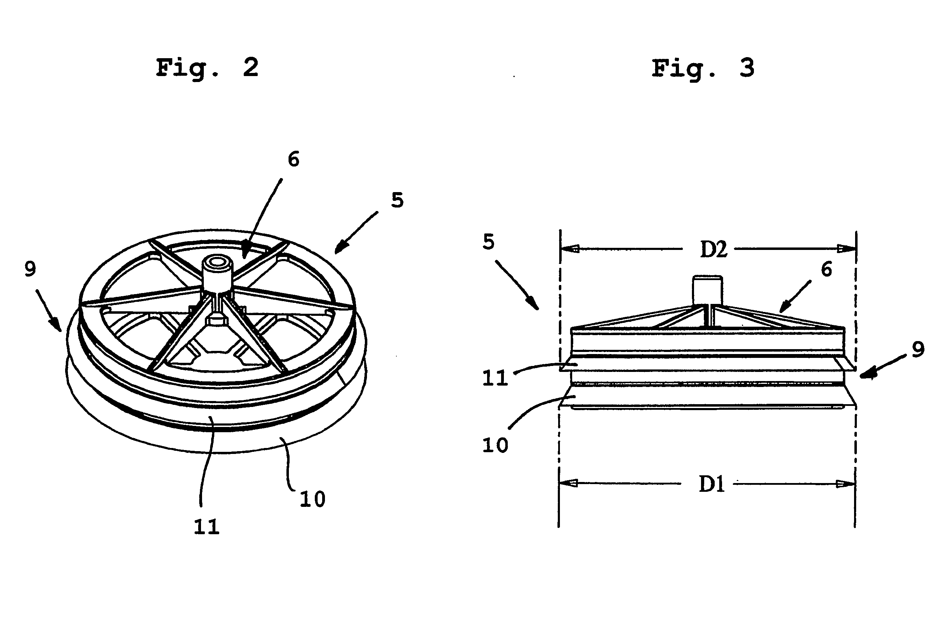

The device for filtration of water depicted in Fig. 1 comprises a container 1 which has an aperture for replenishment with water, and a filtration unit 3 which is movable relative to the container 1. The filtration unit 3 itself comprises a filtration element 5, a control stem 7 connected to the filtration element 5, and seal means 9 along the periphery of the filtration element 5. As illustrated most clearly in Fig. 2, the filtration element 5 comprises a frame 6 to which the seal means 9 are attached. A suitable filter material is disposed within the frame 6. The filtration element 5 may preferably comprise a particle filter and an adsorption filter, which filters are with advantage disposed in each other's immediate proximity in the axial direction of the filtration unit 3.

The present invention is primarily concerned with the configuration of the seal means 9, which will be described in more detail with reference to Figs. 2 and 3. In this context it should be noted that Figs. 2 and 3 show only the frame 6 of the filtration element 5, i.e. the actual filter material is not depicted.

As illustrated in Figs. 2 and 3, the filtration element 5 is provided with two seal elements 10 and 11 in the form of lips/tongues. The lips/tongues 10 and 11 each have their free end pointing downwards, i.e. towards the end of the filtration element 5 which faces towards the bottom of the container 1 when the filtration element 5 is fitted in the container 1. The material of the lips/tongues is with advantage a soft plastic material, preferably polypropylene.

The container 1, which may preferably be made of plastic, is usually provided, for manufacturing technology reasons, with a slight conicity. The conicity is usually within the range 1-5%, preferably within the range 2-5%. Definition of conicity, C:

$$C = (D-d)/L = 2\tan(\alpha/2)$$

The seal means 9 according to the present invention are specially configured to be able to cope with the respective conicity.

What in the position of use of the device is the lower lip/tongue 10 defines in an unloaded state a first diameter D1, and what in the position of use of the device is the upper lip/tongue 11 defines in an unloaded state a second diameter D2, see Fig. 3. The first diameter D1 is generally larger than the second diameter D2. Unloaded state in the present context means the position which the lips/tongues 10, 11 assume when they are not in contact with any surrounding wall. The difference in diameter between D1 and D2 does of course depend on the conicity and height of the container 1. The table below gives some examples of various values of the diameters D1 and D2 for different conicities. The table is based on a container 1 with a bottom diameter of 100 mm and a height of 200 mm.

| Vessel angle, $\alpha$ | Conicity, C, % | Vessel upper diameter, D, mm | Filter seal D1, mm | Filter seal D2, mm |
|---|---|---|---|---|
| 1 | 1.7 | 103.5 | 103.5 | 101.7 |
| 1.5 | 2.6 | 105.2 | 105.2 | 102.6 |
| 2 | 3.5 | 107.0 | 107.0 | 103.5 |
| 2.5 | 4.4 | 108.7 | 108.7 | 104.4 |
| 3 | 5.2 | 110.5 | 110.5 | 105.2 |

The seal arrangement described functions in the following manner. In the initial state, the filtration element 5 is at an upper position, i.e. above the surface of the body of water accommodated in the container 1. The filtration element 5 is caused to adopt this position by manual action upon the control stem 7, i.e. by the operator pulling the filtration element 5 upwards by means of the control stem 7.

Filtration of the water present in the container 1 is effected by imparting to the filtration element 5 a downward movement by manual action upon the control stem 7. The filtration element 5 will thus move downwards through the water body, thereby pressing the water through the filter material. It is important that there is at the same time a complete seal between the periphery of the filtration element 5 and the inside of the container.

In the upper portion of the container 1 the inside diameter is somewhat larger than in the lower portion of the container 1. This means that in the upper portion of the container 1 the lower lip/tongue 10 provides a complete seal against the inside of the container 1. As the filtration element 5 proceeds downwards, the lower lip/tongue 10 will seal against a decreasing inside diameter of the container 1, owing to the conicity of the container 1. When the filtration element 5 approaches the bottom of the container 1, the inside diameter of the container 1 will have decreased so much that there is risk of a certain deformation of the lower lip/tongue 10, which can therefore no longer provide a complete seal against the inside of the container 1. As the upper lip/tongue 11 defines a smaller diameter D2 than the diameter D1 which the lower lip/tongue 10 defines, the upper lip/tongue 11 can provide a complete seal in the lower portion of the conical container 1.

**Conceivable modifications of the invention**

In the embodiment described above, the seal means 9 comprise two lips/tongues 10, 11. Within the scope of the present invention it is of course also conceivable that the seal means 9 may comprise three or more lips/tongues with respective diameters progressively decreasing upwards.

**Claims**

1. A seal arrangement of a device for filtration of water, which device comprises a container (1) which has an aperture for replenishment with water, which container (1) is conical and broadens towards the replenishment aperture, and a filtration unit (3) which is movable relative to the container (1), which filtration unit (3) comprises a filtration element (5), a control stem (7) connected to the filtration element (5), and seal means (9) along the periphery of the filtration element (5), **characterized in that** the seal means (9) comprise at least two seals (10, 11) which are separate from one another in the axial direction of the filtration element (5), and that when the first seal (10), which is situated closest to the bottom of the container (1) in the fitted state of the filtration element (5), is in an unloaded state said first seal defines a diameter (D1) which is larger than the diameter (D2) defined by the second seal (11) in an unloaded state.

2. A seal arrangement according to claim 1,
   **characterized in that** the seals take the form of lips/tongues (10, 11).

3. A seal arrangement according to claim 2,
   **characterized in that** the lips/tongues (10, 11) generally extend towards the bottom of the container (1).

4. A seal arrangement according to any one of the above claims, **characterized in that** with a conicity (C) of the container (1) in the range 1.7-5.2% the difference in diameter, D1-D2, between the first seal (10) and the second seal (11) is in the range 1.8-5.3 mm, where D1 is the diameter defined by the first seal (10) in an unloaded state and D2 is the diameter defined by the second seal (11) in an unloaded state, and that the conicity (C) and the difference in diameter are inter-related within corresponding portions of the ranges indicated.

5. A seal arrangement according to any one of the above claims, **characterized in that** with a conicity (C) of the container (1) in the range 2.6-4.4% the difference in diameter, D1-D2, between the first seal (10) and the second seal (11) is in the range 2.6-4.3 mm, where D1 is the diameter defined by the first seal (10) in an unloaded state and D2 is the diameter defined by the second seal (11) in an unloaded state, and that the conicity (C) and the difference in diameter are inter-related within corresponding portions of the ranges indicated.

6. A seal arrangement according to any one of the above claims, **characterized in that** the seals (10, 11) are made of polypropylene.


**Patentansprüche**

1. Dichtungsanordnung für eine Wasserfiltereinrichtung, wobei die Einrichtung einen Behälter (1) aufweist, der eine Öffnung für das Nachfüllen von Wasser aufweist, wobei der Behälter konisch ist und sich in Richtung der Nachfüllöffnung verbreitert, und mit einer Filtereinheit (3), die relativ zu dem Behälter (1) bewegbar ist, wobei die Filtereinheit (3) ein Filterelement (5), einen Steuerzapfen (7), der mit dem Filterelement (5) verbunden ist, und eine Dichtungseinrichtung (9) entlang des Umfanges des Filterelementes (5) aufweist, **dadurch gekennzeichnet, dass** die Dichtungseinrichtung (9) zumindest zwei Dichtungen (10, 11) aufweist, die in axialer Richtung des Filterelementes (5) voneinander getrennt sind, und das dann, wenn die erste Dichtung (10), die dem Boden des Behälters (1) in dem eingesetzten Zustand des Filterelementes (5) nächstgelegen ist, sich in einem unbelasteten Zustand befindet, dieses erste Dichtungselement einen Durchmesser (D1) definiert, der größer ist als der Durchmesser (D2), der durch die zweite Dichtung in einem unbelasteten Zustand definiert wird.

2. Dichtungsanordnung nach Anspruch 1, **dadurch gekennzeichnet, dass** die Dichtungen die Form von Lippen/ Zungen (10, 11) haben.

3. Dichtungsanordnung nach Anspruch 2, **dadurch gekennzeichnet, dass** die Lippen/Zungen (10,11) sich im Wesentlichen in Richtung des Bodens des Behälters (1) erstrecken.

4. Dichtungsanordnung nach einem der vorstehenden Ansprüche, **dadurch gekennzeichnet, dass** bei einer Konizität (C) des Behälters in dem Bereich von 1,7-5,2%, die Durchmesserdifferenz, D1-D2 zwischen der ersten Dichtung (10) und der zweiten Dichtung (11) in dem Bereich von 1,8-5,3 mm liegt, wobei D1 der Durchmesser ist, der durch die erste Dichtung (10) in einem unbelasteten Zustand definiert wird und D2 der Durchmesser ist, der durch die zweite Dichtung (11) in einem unbelasteten Zustand definiert wird, und dass die Konizität (C) und der Durchmesserunterschied in entsprechenden Abschnitten der angegebenen Bereiche in Beziehung bzw. im Verhältnis zueinander stehen.

**5.** Dichtungsanordnung nach einem der vorstehenden Ansprüche, **dadurch gekennzeichnet, dass** bei einer Konizität (C) des Behälters (1) in dem Bereich von 2,4-4,4%, der Durchmesserunterschied D1-D2 zwischen der ersten Dichtung (10) und der zweiten Dichtung (11) im Bereich von 2,6-4,3 mm liegt, wobei D1 der Durchmesser ist, der durch die erste Dichtung (10) in einem unbelasteten Zustand definiert wird und D2 der Durchmesser ist, der durch die zweite Dichtung (11) in einem unbelasteten Zustand definiert wird, und dass die Konizität (C) und der Durchmesserunterschied in einander entsprechenden Abschnitten der angegebenen Bereiche in Beziehung bzw. im Verhältnis zueinander stehen.

**6.** Dichtungsanordnung nach einem der vorstehenden Ansprüche, **dadurch gekennzeichnet, dass** die Dichtungen (10,11) aus Polypropylen hergestellt sind.

## Revendications

**1.** Système d'étanchéité d'un dispositif de filtration d'eau, lequel dispositif comprend un récipient (1) qui présente une ouverture permettant le remplissage avec de l'eau, lequel récipient (1) est conique et s'élargit en direction de l'ouverture de remplissage, et un système de filtration (3) qui est mobile par rapport au récipient (1), lequel système de filtration (3) comprend un élément filtrant (5), une tige de manoeuvre (7) raccordée à l'élément filtrant (5), et un moyen formant joint d'étanchéité (9) le long de la périphérie de l'élément filtrant (5), **caractérisé en ce que** le moyen formant joint d'étanchéité (9) comprend au moins deux joints (10, 11) qui sont séparés l'un de l'autre dans la direction axiale de l'élément filtrant (5), et **en ce que**, lorsque le premier joint (10), qui est situé le plus près du fond du récipient (1) lorsque l'élément filtrant (5) est en place, est dans un état non chargé, ledit premier joint définit un diamètre (D1) qui est plus grand que le diamètre (D2) défini par le second joint (11) dans un état non chargé.

**2.** Système d'étanchéité selon la revendication 1, **caractérisé en ce que** les joints ont la forme de lèvres/languettes (10, 11).

**3.** Système d'étanchéité selon la revendication 2, **caractérisé en ce que** les lèvres/languettes (10, 11 s'étendent, de manière générale, en direction du fond du récipient (1).

**4.** Système d'étanchéité selon l'une quelconque des revendications précédentes, **caractérisé en ce que**, avec une conicité (C) du récipient (1) qui se trouve dans la fourchette de 1,7 à 5,2 %, la différence de diamètre, D1 - D2, entre le premier joint (10) et le second joint (11) se trouve dans la fourchette de 1,8 à 5,3 mm, où D1 est le diamètre défini par le premier joint (10) dans un état non chargé et D2 est le diamètre défini par le second joint (11) dans un état non chargé, et **en ce que** la conicité (C) et la différence de diamètre sont liées entre elles dans les limites des parties correspondantes des fourchettes indiquées.

**5.** Système d'étanchéité selon l'une quelconque des revendications précédentes, **caractérisé en ce que**, avec une conicité (C) du récipient (1) qui se trouve dans la fourchette de 2,6 à 4,4 %, la différence de diamètre, D1 - D2, entre le premier joint (10) et le second joint (11) se trouve dans la fourchette de 2,6 à 4,3 mm, où D1 est le diamètre défini par le premier joint (10) dans un état non chargé et D2 est le diamètre défini par le second joint (11) dans un état non chargé, et **en ce que** la conicité (C) et la différence de diamètre sont liées entre elles dans les limites des parties correspondantes des fourchettes indiquées.

**6.** Système d'étanchéité selon l'une quelconque des revendications précédentes, **caractérisé en ce que** les joints (10, 11) sont en polypropylène.

# Fig. 1

Fig. 2

Fig. 3

**EP 2 150 325 B1**

**REFERENCES CITED IN THE DESCRIPTION**

**Patent documents cited in the description**

- WO 0057985 A
- WO 2005002706 A